# EUROPEAN PATENT APPLICATION

(11) **EP 4 563 786 A1**
(43) Date of publication of application: **04.06.2025**
(21) Application number: 24211635.8
(22) Date of filing: 08.11.2024
(51) Int. Cl.: F01D 5/00, B23P 6/00, F01D 5/28, F01D 25/00, F02C 7/30, C23C 4/00, F01D 21/00

(54) **METHOD AND COMPONENT FOR REDUCING DAMAGE TO COMPONENTS OF GAS TURBINE ENGINES**

(30) Priority: 01.12.2023 GB 202318387
(71) Applicant: Rolls-Royce plc, London N1 9FX (GB)
(72) Inventor: Elms, Jacob D, Derby, DE24 8BJ (GB); Pawley, Alison R, Derby, DE24 8BJ (GB); Jones, Merren A, Derby, DE24 8BJ (GB); Covey-Crump, Stephen J, Derby, DE24 8BJ (GB); Bojdo, Nicholas M, Derby, DE24 8BJ (GB); Clarkson, Rory J, Derby, DE24 8BJ (GB); Geis, Torsten, Derby, DE24 8BJ (GB); Ndamka, Ngunjoh L, Derby, DE24 8BJ (GB)
(74) Representative: Rolls-Royce plc

(57) **Abstract**

A method (200) for reducing damage to a component (100) of a gas turbine engine (10) includes: determining one or more atmospheric agents that are predicted to be ingested by the gas turbine engine (10) during operation and their concentration; determining a composition and an amount of a predicted deposit (110) that is predicted to form on the component (100) based on the concentration of the one or more atmospheric agents; determining a predicted damage to the component (100) based at least on the composition and the amount of the predicted deposit (110), and a composition of a coating (104) of the component (100); determining an additive (106) and its concentration based on the composition and the amount of the predicted deposit and the predicted damage, such that the additive (106) changes at least one of thermochemical and thermomechanical properties of the predicted deposit (110) to reduce the predicted damage to the component (100); and applying, in-situ, the additive (106) to the component (100).

## Description

### FIELD

The present disclosure relates to a method for reducing damage to a component of a gas turbine engine.

### BACKGROUND

Components of high temperature mechanical systems, such as gas turbine engines, operate in severe, high-temperature environments. Typical components of high-temperature mechanical systems include a nickel or cobalt based superalloy substrate. In an attempt to reduce the temperatures experienced by the substrate, the substrate is coated with a thermal barrier coating (TBC).

Economic and environmental concerns, i.e., increasing demands for improved efficiency and reduced emissions, continue to drive the development of advanced gas turbine engines with higher inlet temperatures. Some components of high-temperature mechanical systems may include a ceramic or ceramic matrix composite (CMC)-based substrate, which may allow an increased operating temperature compared to a component with a superalloy substrate. The CMC-based substrate may be coated with an environmental barrier coating (EBC) to reduce exposure of a surface of the substrate to environmental species, such as water vapor and oxygen.

Moreover, gas turbine engines are typically exposed to variable environmental conditions, such as variations in atmospheric agent compositions and high global variability of mineral dust. These mineral particles are generally ingested during routine engine operation in dusty and and regions. This may lead to the deposition of ingested minerals/materials on surfaces of the components. Such deposition of ingested minerals/materials may subsequently damage the TBCs and the EBCs. Specifically, such deposition may melt during operation of the gas turbine engine, thereby damaging the TBCs and the EBCs. The failure of the TBCs and the EBCs may cause the underlying alloy or CMC-based substrate to become exposed and damaged by heat. The corrosion of the alloy/CMC-based components may cause points of stress concentration and weakness that may result in eventual component failure.

### SUMMARY

According to a first aspect there is provided a method for reducing damage to a component of a gas turbine engine. The component includes a substrate and a coating disposed on the substrate. The method includes determining one or more atmospheric agents present in air that are predicted to be ingested by the gas turbine engine during operation. The method further includes determining a composition and a concentration of the one or more atmospheric agents present in the air. The method further includes determining a composition and an amount of a predicted deposit that is predicted to form on the component based on the composition and the concentration of the one or more atmospheric agents. The method further includes determining a predicted damage to the component based at least on: the composition and the amount of the predicted deposit; and a composition of the coating of the component. The method further includes determining an additive and its concentration based on the composition and the amount of the predicted deposit and the predicted damage, such that the additive changes at least one of a thermochemical property and a thermomechanical property of the predicted deposit so as to reduce the predicted damage to the component. The method further includes applying, in-situ, the additive to the component of the gas turbine engine.

The method of the present disclosure may therefore reduce the predicted damage to the component. Specifically, the additive that is determined based on the predicted damage may reduce the predicted damage to the component by changing at least one of the thermochemical property and the thermomechanical property of the predicted deposit. Since the additive is determined based on the predicted damage, any future damage to the component may be reduced or prevented.

Moreover, the additive may not be a predetermined additive that is typically applied during manufacturing of the component, but dynamically determined based on the predicted damage. Specifically, the additive may be dynamically determined based on the composition and the amount of the predicted deposit which may form due to ingestion of the one or more atmospheric agents during operation of the gas turbine engine.

As the additive is applied, in-situ, to the component of the gas turbine engine, the method may not require disassembly of the component from the gas turbine engine. The additive may also be applied after the component has been manufactured and installed in the gas turbine engine. The method may be economical, especially when compared to replacing the component with a new one after it incurs the predicted damage.

In some embodiments, the additive raises a melting temperature of the predicted deposit to above an operating temperature of the gas turbine engine. Consequently, the predicted deposit may not form a melt during operation of the gas turbine engine, and therefore may not damage the coating and/or the substrate of the component.

In some embodiments, the additive increases a viscosity of the predicted deposit in its molten phase. Consequently, the predicted deposit may flow less readily in its molten phase than without the application of the additive. Since higher viscosity melts may infiltrate the coating to a lesser extent than their less viscous counterparts over the same time period, an increase in the viscosity of the predicted deposit may reduce the predicted damage to the component.

In some embodiments, determining the predicted damage is further based on a thickness of the coating of the component and a composition of the substrate of the component. In other words, the method may take into account the thickness of the coating of the component and the composition of the substrate. For example, thicker coatings may resist infiltration to a higher extent than thinner coatings. Therefore, the additive may be determined accordingly. In some embodiments, the predicted damage may be further based a density of the coating and/or a porosity of the coating. Thus, the method may take into account the density of the coating and the porosity of the substrate, and the additive may be determined accordingly.

In some embodiments, the method further includes determining a composition and an amount of a pre-existing deposit formed on the component. The predicted damage is further determined based on the composition and the amount of the pre-existing deposit. The additive further changes at least one of a thermochemical property and a thermomechanical property of the pre-existing deposit so as to reduce the predicted damage to the component.

Therefore, the method may also reduce or prevent any damage that may be caused due to melts that may form from the pre-existing deposit. The additive may raise a melting temperature of the pre-existing deposit to above an operating temperature of the gas turbine engine and/or the additive may increase a viscosity of the pre-existing deposit in its molten phase. The method may thus account for damage which may be caused by both the predicted deposit and the pre-existing deposit.

In some embodiments, the one or more atmospheric agents include at least one of calcium, magnesium, aluminium, silicon, sulphur, sodium, and chlorine. For example, mineral dust and volcanic ash may contain calcium, magnesium, aluminium, silicon, sulphur, iron, and the like. Furthermore, in some cases, the one or more atmospheric agents may include sodium and chlorine in the form of sodium chloride (NaCl).

In some embodiments, the one or more atmospheric agents, the composition of the one or more atmospheric agents, and the concentration of the one or more atmospheric agents present in the air are determined via at least one of a meteorological database and a meteorological model. Thus, the one or more atmospheric agents and the concentration thereof may be accurately determined.

In some embodiments, the additive is a dry agent (e.g., a powder) or a dry aerosol.

In some embodiments, applying the additive to the component includes spraying a solution including the additive onto a surface of the component. Spraying the solution onto the surface of the component may homogeneously apply the additive onto the surface of the component.

In some embodiments, the solution is sprayed onto the surface of the component through a borescope port of the gas turbine engine. Therefore, the additive may be applied to the component conveniently through the borescope port, for example, during inspection or maintenance of the gas turbine engine.

In some embodiments, the method further includes providing a spraying device. The spraying device includes a storage tank storing the solution and a nozzle fluidically connected to the storage tank. The method further includes positioning the nozzle towards the component. The method further includes spraying, via the nozzle, the solution onto the surface of the component.

The spraying device may facilitate applying the additive to the component. For example, the spraying device may be portable, and the nozzle may be easily positioned towards the component.

In some embodiments, the nozzle is positioned upstream of an engine core of the gas turbine engine. In such embodiments, the additive may be applied to the component from a front side of the gas turbine engine.

In some embodiments, the storage tank is a hopper. The hopper may mix the additive with a suitable liquid to form the solution.

In some embodiments, the additive is applied to the component when the gas turbine engine is not operating. Thus, the additive may be applied or reapplied to the component conveniently during inspection, maintenance, fuelling, and routine down-time of the gas turbine engine.

In some embodiments, the method further includes determining, via a sensor, the predicted deposit formed on the component during operation of the gas turbine engine. The method further includes spraying the solution onto the surface of the component via one or more nozzles during operation of the gas turbine engine. The one or more nozzles are disposed proximal to the component. The one or more nozzles are fluidically connected to a reservoir storing the solution.

Advantageously, the additive may be applied to the component during operation of the gas turbine engine when formation of the predicted deposit is sensed or determined by the sensor. This may reduce a time between formation of the predicted deposit and application of the additive to the component, which may further reduce the predicted damage.

According to a second aspect there is provided a component for a gas turbine engine. The component includes the additive that is applied according to the method of the first aspect.

The component may have an increased operational lifespan as the predicted damage to the component may be reduced or prevented by application of the additive. The component may therefore not fail prematurely.

According to a third aspect there is provided a gas turbine engine. The gas turbine engine includes the component of the second aspect.

The gas turbine engine may require fewer maintenance breaks as the component may incur reduced damage and may not fail prematurely. Further, the gas turbine engine may advantageously be operated at locations including mineral dusts, volcanic ash, etc, without adverse effects on its components.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. The bypass duct may be substantially annular. The bypass duct may be radially outside the engine core. The radially outer surface of the bypass duct may be defined by a nacelle and/or a fan case.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e., the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the FIGS, in which:
**FIG. 1** is a sectional side view of a gas turbine engine;
**FIG. 2** is a schematic cross-sectional view of a component of a gas turbine engine in accordance with an embodiment of the present disclosure;
**FIG. 3** is a flowchart depicting various steps of a method for reducing damage to the component in accordance with an embodiment of the present disclosure;
**FIG. 4** is a schematic diagram of a spraying device applying a solution onto the component in accordance with an embodiment of the present disclosure;
**FIG. 5** is a schematic diagram of the spaying device applying the solution onto the component in accordance with another embodiment of the present disclosure; and
**FIG. 6** is a schematic diagram of a nozzle applying the solution to the component in accordance with another embodiment of the present disclosure.

### DETAILED DESCRIPTION

Aspects and embodiments of the present disclosure will now be discussed with reference to the accompanying FIGS. Further aspects and embodiments will be apparent to those skilled in the art.

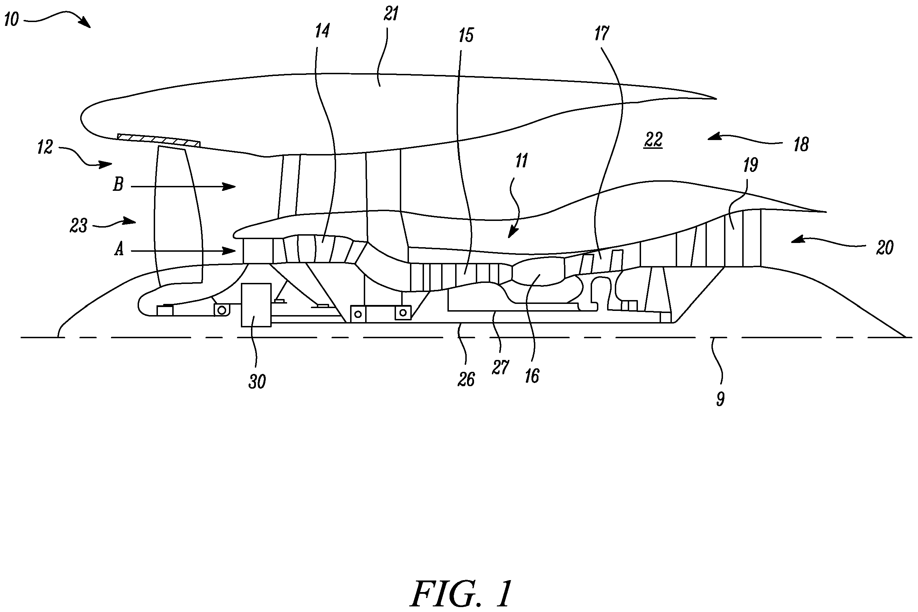

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine 10 shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

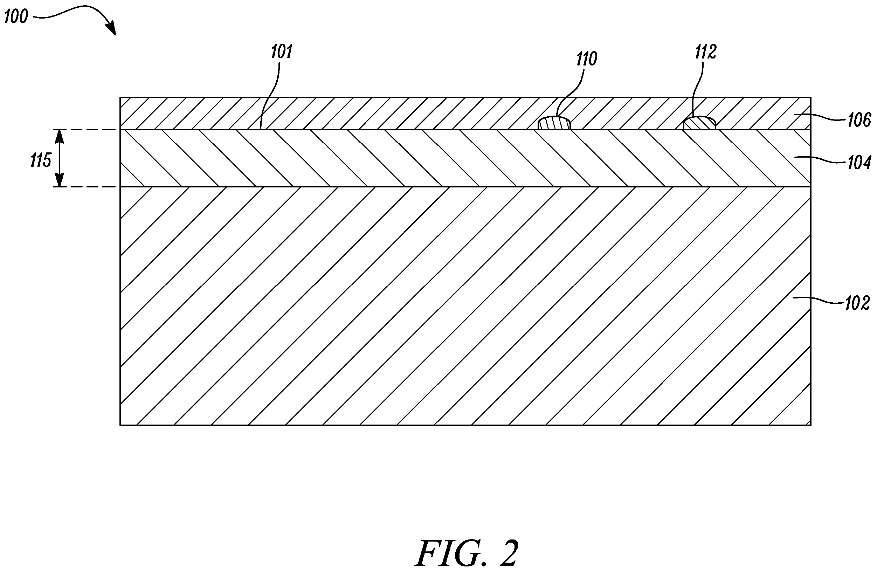

**FIG. 2** shows a schematic cross-sectional view of a component 100 of a gas turbine engine (e.g., the gas turbine engine 10 of FIG. 1) in accordance with an embodiment of the present disclosure.

The component 100 may operate at high temperatures, which may be greater than about 1000 °C, greater than about 1500 °C, or greater than about 1600 °C. Examples of the component 100 include, but are not limited to, seal segments, shrouds, combustion tubes, blade tracks, disc assemblies, aerofoils (e.g., blades or vanes), combustion chamber liners, and the like, of the gas turbine engine.

The component 100 includes a substrate 102 and a coating 104 disposed on the substrate 102. In some examples, the substrate 102 may include a metal alloy (e.g., a superalloy). Examples of metal alloys include, but are not limited to, Si-containing metal alloys such as molybdenum-silicon alloys (e.g., MoSi₂) and niobium-silicon alloys (e.g., NbSi₂), or a superalloy based on nickel (Ni), cobalt (Co), nickel/iron (Ni/Fe), or the like.

In some other examples, the substrate 102 may include a ceramic matrix composite (CMC). The CMC may include any ceramic matrix material, including, for example, silicon carbide, silicon nitride, alumina, silica, and the like. The CMC may further include any desired filler material, and the filler material may include a continuous reinforcement or a discontinuous reinforcement. For example, the filler material may include discontinuous whiskers, platelets, or particulates. As another example, the filler material may include a continuous monofilament or multifilament weave.

The coating 104 may be a thermal barrier coating (TBC), an environmental barrier coating (EBC), and the like. The coating 104 may be selected based on the substrate 102 and its composition, and application requirements of the component 100. Further, the coating 104 has a thickness 115. The thickness 115 of the coating 104 may also depend upon the application requirements of the component 100. For example, in some cases, the thickness 115 may be proportional to a temperature at which the component 100 operates. In some embodiments, the coating 104 may define a surface 101 of the component 100. The surface 101 may be an outer surface of the component 100.

While not shown in FIG. 2, the component 100 may further have a bond coat (not shown) disposed between the substrate 102 and the coating 104. The bond coat may improve bonding between the substrate 102 and the coating 104.

The gas turbine engine including the component 100 may ingest one or more atmospheric agents (e.g., mineral dust, volcanic ash, etc.) during operation. As a result, various deposits may form on the component 100, or more specifically, the surface 101 of the component 100. Such deposits may form a melt during operation of the gas turbine engine, and consequently may damage the component 100. Specifically, the melt formed from the deposits may damage the coating 104, and in some cases, may further damage the substrate 102 of the component 100. As used herein, the term "melt" refers to a deposit in its molten phase.

In the illustrated embodiment of FIG. 2, the deposits formed on the component 100 include a predicted deposit 110 and a pre-existing deposit 112. As used herein, the term "predicted deposit" refers to a deposit that is predicted to form on the component 100 during operation of the gas turbine engine on a specific route. Further, the term "pre-existing deposit" refers to a deposit that is already formed on the component 100 due to prior operation of the gas turbine engine on a specific route.

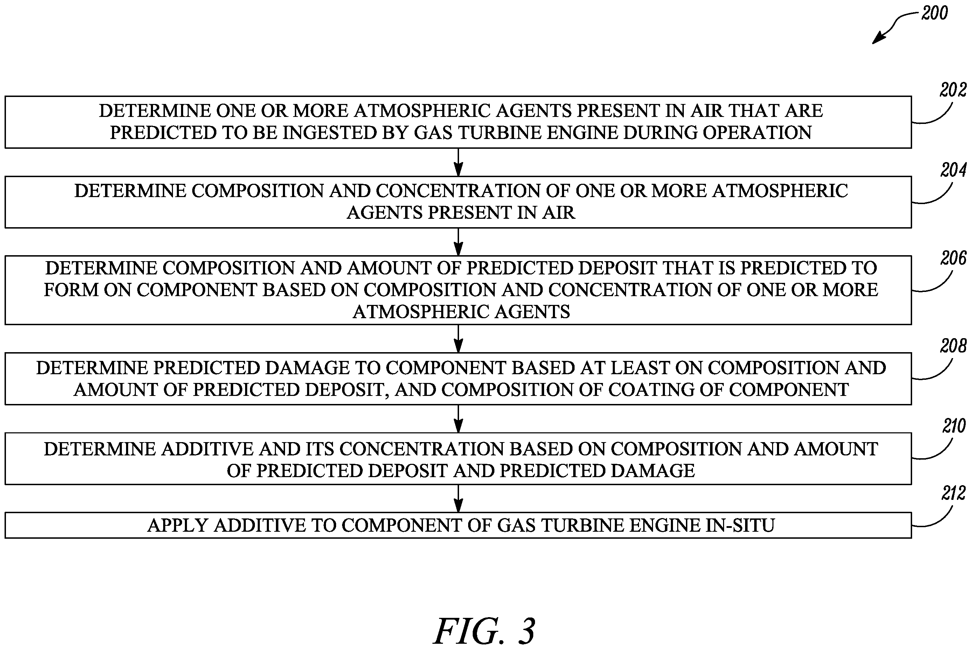

In the illustrated embodiment of FIG. 2, the component 100 further includes an additive 106. The additive 106 is applied to the surface 101 of the component 100. As will be described in greater detail below, the additive 106 may be applied to the component 100 for reducing damage to the component 100 due to the deposits, or more specifically, due to the predicted deposit 110 and the pre-existing deposit 112. The predicted deposit 110, the pre-existing deposit 112, and the additive 106 will now be discussed in greater detail with reference to **FIG. 3****.**

FIG. 3 shows a flowchart depicting various steps of a method 200 for reducing damage to a component (e.g., the component 100 of FIG. 2) of a gas turbine engine (e.g., the gas turbine engine 10 of FIG. 1) in accordance with an embodiment of the present disclosure. In some embodiments, one or more steps of the method 200 may be carried out by a processor.

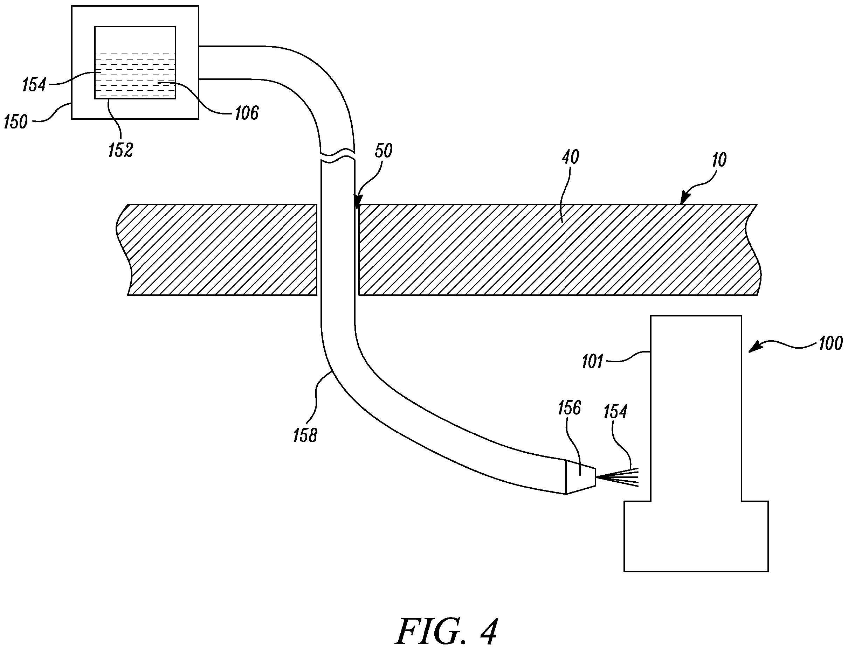

The method 200 will be discussed with reference to the gas turbine engine 10 of FIG. 1 and the component 100 of FIG. 2. However, the method 200 may also be implemented with gas turbine engines having other suitable engine configurations. The method 200 will also be explained with further reference to FIGS. 4 to 6.

At step 202, the method 200 includes determining one or more atmospheric agents present in air that are predicted to be ingested by the gas turbine engine during operation. Referring to FIG. 1, for example, the method 200 may include determining one or more atmospheric agents that are predicted to be ingested by the gas turbine engine 10 during operation.

The one or more atmospheric agents may include mineral dust, a mixture of various different mineral dusts, volcanic ash, sulphur/sulphate gases, water, and any other atmospheric agents that can participate in and/or catalyse formation of deposits that can form melts and potentially damage the component.

In some embodiments, the one or more atmospheric agents include at least one of calcium, magnesium, aluminium, silicon, sulphur, sodium, and chlorine. For example, volcanic ash and mineral dust may contain calcium, magnesium, aluminium, silicon, sulphur, iron, and the like. Furthermore, in some cases, the one or more atmospheric agents may include sodium and chlorine in the form of sodium chloride (NaCl).

As will be described in greater detail below, the one or more atmospheric agents that are predicted to be ingested by the gas turbine engine during operation may be determined meteorologically.

At step 204, the method 200 further includes determining a composition and a concentration of the one or more atmospheric agents present in the air. In some examples, cumulative concentration of the one or more atmospheric agents may be used to establish a damage threshold to the component.

In some embodiments, the one or more atmospheric agents, the composition of the one or more atmospheric agents, and the concentration of the one or more atmospheric agents present in the air are determined via at least one of a meteorological database and a meteorological model.

As used herein, the term "meteorological" refers to the scientific study of Earth's atmosphere and its changes, used especially in predicting what the weather will be like.

As used herein, the term "meteorological database" refers to a large-scale database which stores meteorological data of a location/site that is acquired by various monitoring devices (e.g., satellites, sensors, radar, and so forth). The meteorological database may include historical meteorological data as well as predicted/forecasted meteorological data of the location/site, such as composition of air, wind speed and direction at various altitudes, humidity, sunlight intensity, pressure, precipitation (e.g., rain, snow, hail), transport of particulate matter and volcanic ash, distribution of corrosion gases, and other meteorological parameters.

As used herein, the term "meteorological model" refers to a mathematical or a computational model that forecasts meteorological data of a location/site. In other words, a meteorological model may predict future meteorological data of the location/site based upon current and historical meteorological data of the location/site. A meteorological model may receive input data from a meteorological database and provide a forecast output based on the input data. The forecast output may also be stored in the meteorological database.

For example, the composition of the one or more atmospheric agents and the concentration of the one or more atmospheric agents present in the air may be determined based on the meteorological data taken from the World Health Organisation (WHO), the Met Office's Numerical Atmospheric-dispersion Modelling Environment (NAME), Quantitative Volcanic Ash (QVA) models, European Centre for Medium-Range Weather Forecasts (ECMWF), and the like.

As an example, for a given latitude, longitude, altitude and time, the determined meteorological data from steps 202 and 204 may include: a sediment composition (in wt. %) of: Na₂O = 5.72, CaO = 29.76, MgO = 14.09, Al₂O₃ = 8.21, SiO₂ = 35.18, FeO = 4.53, K₂O = 1.85, TiO₂ = 0.66; average relative humidity of 25 %; average wind speed of 33 kilometres per hour (km/h); average pressure of 1017.9 millibars (mb); and average airborne mineral dust concentration of 1 microgram per metre cube (µg/m³).

At step 206, the method 200 further includes determining a composition and an amount of a predicted deposit that is predicted to form on the component based on the composition and the concentration of the one or more atmospheric agents. Referring to FIG. 2, for example, the method 200 may include determining a composition and an amount of the predicted deposit 110 that is predicted to form on the component 100 based on the composition and the concentration of the one or more atmospheric agents.

In some embodiments, the method 200 further includes determining a composition and an amount of a pre-existing deposit formed on the component. Referring to FIG. 2, for example, the method 200 may include determining a composition and an amount of the pre-existing deposit 112 formed on the component 100.

The composition and the amount of the pre-existing deposit may be measured by techniques such as, in-situ Raman spectroscopy, in-situ Low Energy Electron Diffraction (LEED), in-situ Laser Induced Breakdown Spectroscopy (LIBS), borescoping, deposit sampling, compositional analysis (e.g., X-Ray Diffraction [XRD]), or by using a computational model.

The composition and amount of the predicted deposit (e.g., the predicted deposit 110 of FIG. 2) may be determined as a product of systematic, codified relationships between the concentration of the one or more atmospheric agents and the composition and the amount of the pre-existing deposit, if present.

An example of such relationships include fractionation of the one or more atmospheric agents as they travel through the gas turbine engine, and an amount of a deposit that forms from fractionated constituents of each of the one or more atmospheric agents. The term "fractionation" of the one or more atmospheric agents refers to a process of separating the constituents of each of the one or more atmospheric agents based on a specific property, for example, particle size, composition, and the like. The amount of the predicted deposit that forms from the fractionated constituents of each of the one or more atmospheric agents may be calculated by using a computational model such as deposition and accretion models.

Fractionation of the one or more atmospheric agents may be a function of core dust dose values (in mg/m³), which may be calculated, for example, using a computational model at any location, any time, and over any three-dimensional space using data from the European Centre for Medium-Range Weather Forecasts - Copernicus Atmosphere Monitoring Service (ECMWF-CAMS).

Fractionation of the one or more atmospheric agents may further be a function of thermal and fluid dynamic parameters of the gas turbine engine at a specific thrust rating. The thermal and fluid dynamic parameters may be determined using computational models, such as performance and air systems models.

Fractionation of the one or more atmospheric agents may further be a function of earlier deposition of dust constituents on other components of the gas turbine engine that are upstream of the component. This may be calculated using computational models such as deposition and accretion models.

Fractionation of the one or more atmospheric agents may further be a function of reactivity and stability of the constituents of the one or more atmospheric agents under a temperature profile within an engine core (e.g., the engine core 11 of FIG. 1) of the gas turbine engine. This may be calculated from the composition of each of the one or more atmospheric agents using a thermodynamic modelling software.

As an example of a predicted deposit composition, for a high pressure turbine blade, the determined composition of the predicted deposit may be a deposit composition (in wt. %) of: CaO = 34.10, MgO = 7.76, Al₂O₃ = 10.91, SiO₂ = 43.41, FeO =1.15, K₂O = 0.26, SO₃ = 0.03, Na₂O = 2.35 at a core dose concentration of 10 mg/m³.

At step 208, the method 200 further includes determining a predicted damage to the component based at least on the composition and the amount of the predicted deposit, and a composition of the coating of the component. Referring to FIG. 2, for example, the method 200 may include determining a predicted damage to the component 100 based at least on a composition and an amount of the predicted deposit 110, and a composition of the coating 104 of the component 100.

As used herein, the term "predicted damage" refers to an estimated damage caused to the component due to formation of melts from deposits on the component. Such deposits may include the predicted deposit and the pre-existing deposit.

In some embodiments, the predicted damage is further determined based on the composition and the amount of the pre-existing deposit. Referring to FIG. 2, for example, the predicted damage may be further determined based on the composition and the amount of the pre-existing deposit 112.

In some embodiments, determining the predicted damage is further based on a thickness of the coating of the component and a composition of the substrate of the component. Referring to FIG. 2, for example, determining the predicted damage may be further based on the thickness 115 of the coating 104 of the component 100 and a composition of the substrate 102 of the component 100. In other words, in some examples, the predicted damage to the component 100 may be determined based on the composition and the amount of the predicted deposit 110, the composition and the amount of the pre-existing deposit 112, the composition of the coating 104, the thickness 115 of the coating 104, and the composition of the substrate 102. In some embodiments, the predicted damage may be further based a density of the coating 104 and/or a porosity of the coating 104. In some embodiments, the predicted damage is further based on operating parameters of the gas turbine engine 10 (shown in FIG. 1).

The predicted damage may be quantified based on the thermochemical and/or thermomechanical properties of the predicted deposit 110 and/or the pre-existing deposit 112. The thermochemical and/or thermomechanical properties may include, for example, a melting profile between the solidus and liquidus temperatures of the deposit and the viscosity of the deposit. This may be determined using empirical data or calculated using a thermodynamic modelling software.

The predicted damage may be further quantified based on reactivity of a material of the component (e.g., nickel super-alloy, TBC, EBC) with the predicted deposit 110 and/or the pre-existing deposit 112. This may be calculated using, for example, solvation models, and libraries/look-up tables of compositional data of deposits formed on service-return components and thermodynamic data calculated using a thermodynamic modelling software.

The quantified predicted damage may include a depth and an extent of infiltration of a melt (of the predicted deposit and/or the pre-existing deposit) into the coating. The quantified predicted damage may further include a probability/extent of failure of the coating by, for example, cracking, blistering, spallation, and delamination due to the melt. The quantified predicted damage may further include formation of any corrosion products or new phases from reactions of the melt that has a deleterious effect on the coating and the substrate. The quantified predicted damage may further include reactive solvation/depletion of the coating and the substrate of the component by the melt. The quantified predicted damage may further include a probability/extent of pitting/cracking/corrosion of the substrate due to the melt.

Thus, the method 200 may be used to predict and quantify the damage to the component 100 that may potentially be caused by the ingestion of the one or more atmospheric agents during operation of the gas turbine engine.

At step 210, the method 200 further includes determining an additive and its concentration based on the composition and the amount of the predicted deposit and the predicted damage, such that the additive changes at least one of a thermochemical property and a thermomechanical property of the predicted deposit so as to reduce the predicted damage to the component. Referring to FIG. 2, for example, the method 200 may include determining the additive 106 and its concentration based on the composition and the amount of the predicted deposit 110 and the predicted damage, such that the additive 106 changes at least one of a thermochemical property and a thermomechanical property of the predicted deposit 110 so as to reduce the predicted damage to the component 100.

A composition and the concentration of the additive may be determined based on the thermochemical property and/or the thermomechanical property of the predicted deposit. Specifically, the additive may be formulated based on the thermochemical property and/or the thermomechanical property of the predicted deposit so as to change at least one of its thermochemical property and thermomechanical properties. The additive may be an inorganic compound and/or a mixture of inorganic compounds. In some embodiments, the additive may be a dry agent (e.g., a powder) or a dry aerosol. In some other embodiments, the additive may be suspended in a solution, such that the solution may be applied to the component to deposit the additive on the component. Examples of the additive include, but are not limited to, calcite, dolomite, oxides, carbonates, nitrates, and borates.

In some embodiments, the additive raises a melting temperature of the predicted deposit to above an operating temperature of the gas turbine engine. Referring to FIGS. 1 and 2, for example, the additive 106 may raise a melting temperature of the predicted deposit 110 to above an operating temperature of the gas turbine engine 10. Consequently, the predicted deposit 110 may not form a melt during operation of the gas turbine engine 10, and consequently may not damage the component 100. For example, dolomite (CaMg[CO₃]₂) may increase the temperature at which a deposit starts melting to above 1400 °C, and the deposit may not become completely molten until at least 1644 °C. Consequently, the dolomite-modified deposit may remain partially molten during operation of the gas turbine engine, rather than completely molten.

In some embodiments, the additive increases a viscosity of the predicted deposit in its molten phase. Referring to FIG. 2, for example, the additive 106 may increase a viscosity of the predicted deposit 110 in its molten phase. The viscosity of a melt formed from a deposit may influence the rate at which and extent to which the melt infiltrates into the coating over a given timescale. For example, higher viscosity melts may infiltrate the coating to a lesser extent than their less viscous counterparts over the same time period because less viscous melts flow more readily.

In some embodiments, the additive further changes at least one of a thermochemical property and a thermomechanical property of the pre-existing deposit so as to reduce the predicted damage to the component. Referring to FIG. 2, for example, the additive 106 may further change at least one of a thermochemical property and a thermomechanical property of the pre-existing deposit 112 so as to reduce the predicted damage to the component.

In some embodiments, a composition of the additive may be further determined based on a thermochemical property and/or the thermomechanical property of the pre-existing deposit, if present. In some embodiments, the additive may raise a melting temperature of the pre-existing deposit to above the operating temperature of the gas turbine engine and/or the additive may increase a viscosity of the pre-existing deposit in its molten phase.

At step 212, the method 200 further includes applying, in-situ, the additive to the component of the gas turbine engine. Referring to FIG. 2, for example, the method 200 may include applying, in-situ, the additive 106 to the component 100 of the gas turbine engine.

The additive may be applied to the component in-situ by various different ways. In some embodiments, the additive is applied to the component when the gas turbine engine is not operating. Referring to **FIG. 4****,** for example, the additive 106 may be applied to the component 100 when the gas turbine engine 10 is not operating.

In some embodiments, applying the additive to the component includes spraying a solution including the additive onto a surface of the component. In some examples, the additive may remain suspended in the solution. Referring to FIG. 4, for example, applying the additive 106 to the component 100 may include spraying a solution 154 including the additive 106 onto the surface 101 of the component 100. As an example, the solution 154 may include the additive 106 suspended in ethanol. In this example, the application of the solution 154 may homogenously coat the surface 101 of the component 100 with the additive 106 and ethanol may subsequently evaporate.

In some embodiments, the method 200 further includes providing a spraying device including a storage tank storing the solution and a nozzle fluidically connected to the storage tank. In some embodiments, the method 200 further includes positioning the nozzle towards the component. In some embodiments, the method 200 further includes spraying, via the nozzle, the solution onto the surface of the component.

Referring to FIG. 4, for example, the method 200 may include providing a spraying device 150 including a storage tank 152 storing the solution 154 and a nozzle 156 fluidically connected to the storage tank 152. The method 200 may further include positioning the nozzle 156 towards the component 100, and spraying, via the nozzle 156, the solution 154 onto the surface 101 of the component 100. The spraying device 150 may further include a conduit 158 that fluidically connects the nozzle 156 to the storage tank 152.

In some embodiments, the storage tank is a hopper. Referring to FIG. 4, for example, the storage tank 152 may be a hopper. The hopper may mix the additive 106 with a suitable liquid (e.g., ethanol) to form the solution 154.

In some embodiments, the solution 154 including the additive 106 may be ready-made based on operating routes of the gas turbine engine. For example, a gas turbine engine that operates on a specific route may experience deposit build-up of a specific type. Thus, a first solution may be applied to the components of a gas turbine engine operating on a first route, and a second solution (different from the first solution) may be applied to the components of a gas turbine engine operating on a second route. The first solution and the second solution may thus be ready-made and stocked up for use.

In some embodiments, the solution is sprayed onto the surface of the component through a borescope port of the gas turbine engine. Referring to FIG. 4, for example, the solution 154 may be sprayed onto the surface 101 of the component 100 through a borescope port 50 of the gas turbine engine 10. A casing 40 of the gas turbine engine 10 may include the borescope port 50. As shown in FIG. 4, the conduit 158 may be extended through the borescope port 50, such that the nozzle 156 is positioned towards the component 100, and the solution 154 may be sprayed onto the surface 101 of the component 100.

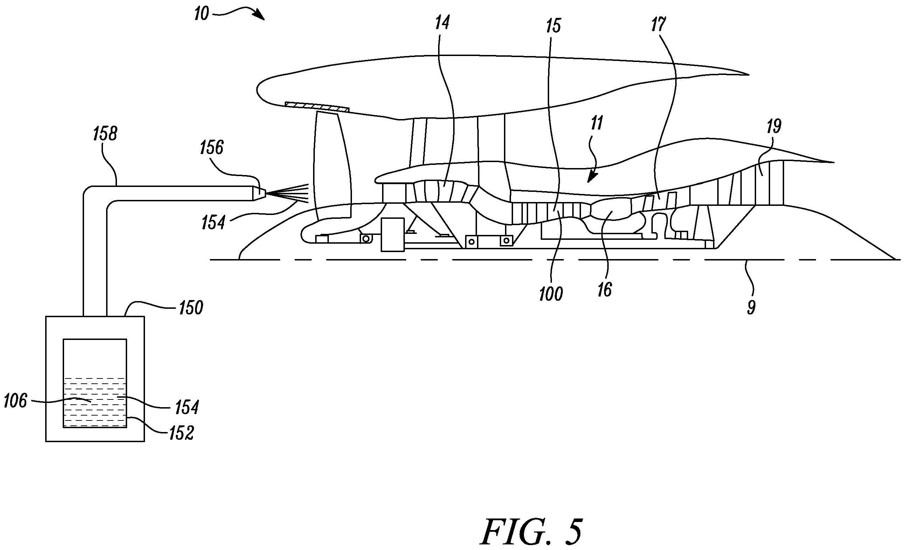

In some embodiments, the nozzle is positioned upstream of an engine core of the gas turbine engine. Referring to FIG. 5, for example, the nozzle 156 may be positioned upstream of the engine core 11 of the gas turbine engine 10. The solution 154 may be sprayed as a mist onto the component 100 via the nozzle 156 positioned upstream of the engine core 11. In FIG. 5, the component 100 is a high pressure compressor blade.

The additive 106 may be applied or reapplied to the component 100 conveniently when the gas turbine engine 10 is not operating, such as during inspection, maintenance, fuelling, and routine down-time of the gas turbine engine 10.

In some embodiments, the additive is applied to the component during operation of the gas turbine engine. Specifically, in some embodiments, the method 200 further includes determining, via a sensor, the predicted deposit formed on the component during operation of the gas turbine engine. The method 200 further includes spraying the solution onto the surface of the component via one or more nozzles during operation of the gas turbine engine. The one or more nozzles are disposed proximal to the component. The one or more nozzles are fluidically connected to a reservoir storing the solution. The sensor may include, for example, a Raman spectrometer, a Low Energy Electron Diffraction spectrometer, a Laser Induced Breakdown spectrometer, a Laser Diffraction spectrometer, and the like.

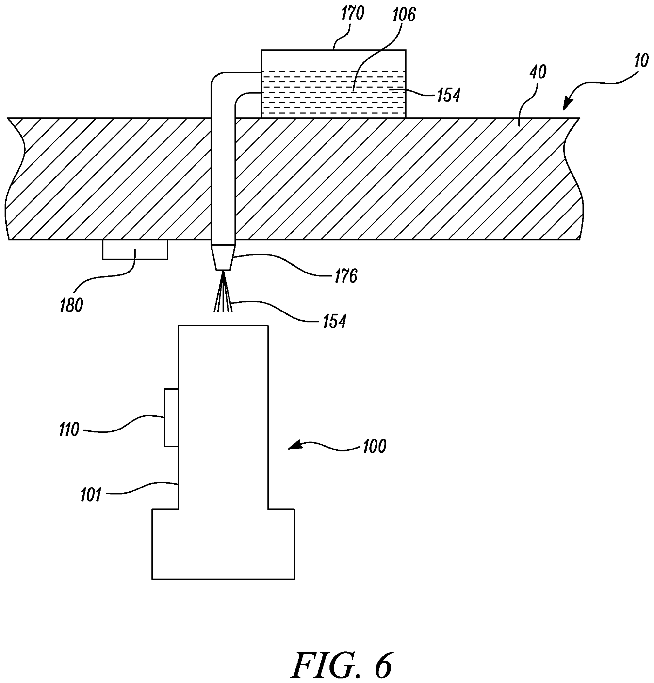

Referring to **FIG. 6****,** for example, the method 200 may include determining, via a sensor 180, the predicted deposit 110 formed on the component 100 during operation of the gas turbine engine 10. The method 200 may further include spraying the solution 154 onto the surface 101 of the component 100 via one or more nozzles 176 during operation of the gas turbine engine 10. The one or more nozzles 176 may be disposed proximal to the component 100. In some cases, the one or more nozzles 176 may be disposed circumferentially on the casing 40 of the gas turbine engine 10. The one or more nozzles 176 may be fluidically connected to a reservoir 170 storing the solution 154. In some examples, the reservoir 170 may be disposed on a wing of an aircraft including the gas turbine engine 10.

Therefore, the additive 106 may be sprayed onto the surface 101 of the component 100 in-situ during flight when the sensor 180 detects formation of the predicted deposit 110. The additive 106 may be sprayed as a mist onto the component 100 via the one or more nozzles 176 that are permanently mounted inside the gas turbine engine 10 proximal to the component 100.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (200) for reducing damage to a component (100) of a gas turbine engine (10), the component having a substrate (102) and a coating (104) disposed on the substrate (102), the method (200) comprising the steps of:
determining one or more atmospheric agents present in air that are predicted to be ingested by the gas turbine engine (10) during operation;
determining a composition and a concentration of the one or more atmospheric agents present in the air;
determining a composition and an amount of a predicted deposit (110) that is predicted to form on the component based on the composition and the concentration of the one or more atmospheric agents;
determining a predicted damage to the component (100) based at least on:
the composition and the amount of the predicted deposit (110); and
a composition of the coating (104) of the component (100);
determining an additive (106) and its concentration based on the composition and the amount of the predicted deposit and the predicted damage, such that the additive (106) changes at least one of a thermochemical property and a thermomechanical property of the predicted deposit (110) so as to reduce the predicted damage to the component (100); and
applying, in-situ, the additive (106) to the component (100) of the gas turbine engine (10).

2. The method (200) of claim 1, wherein the additive (106) raises a melting temperature of the predicted deposit (110) to above an operating temperature of the gas turbine engine (10).

3. The method (200) of claim 1 or 2, wherein the additive (106) increases a viscosity of the predicted deposit (110) in its molten phase.

4. The method (200) of any one of claims 1 to 3, wherein determining the predicted damage is further based on:
a thickness (115) of the coating (104) of the component (100); and
a composition of the substrate (102) of the component (100).

5. The method (200) of any one of claims 1 to 4, further comprising determining a composition and an amount of a pre-existing deposit (112) formed on the component (100), wherein the predicted damage is further determined based on the composition and the amount of the pre-existing deposit (112), and wherein the additive (106) further changes at least one of a thermochemical property and a thermomechanical property of the pre-existing deposit (112) so as to reduce the predicted damage to the component (100).

6. The method (200) of any one of claims 1 to 5, wherein the one or more atmospheric agents comprise at least one of calcium, magnesium, aluminium, silicon, sulphur, sodium, and chlorine.

7. The method (200) of any one of claims 1 to 6, wherein the one or more atmospheric agents, the composition of the one or more atmospheric agents, and the concentration of the one or more atmospheric agents present in the air are determined via at least one of a meteorological database and a meteorological model.

8. The method (200) of any one of claims 1 to 7, wherein applying the additive (106) to the component (100) comprises spraying a solution (154) comprising the additive (106) onto a surface (101) of the component (100).

9. The method (200) of claim 8, wherein the solution (154) is sprayed onto the surface (101) of the component (100) through a borescope port (50) of the gas turbine engine (10).

10. The method (200) of claim 8, further comprising:
providing a spraying device (150) comprising a storage tank (152) storing the solution (154) and a nozzle (156) fluidically connected to the storage tank (152);
positioning the nozzle (156) towards the component (100); and
spraying, via the nozzle (156), the solution onto the surface (101) of the component (100).

11. The method (200) of claim 10, wherein the nozzle (156) is positioned upstream of a core (11) of the gas turbine engine (10).

12. The method (200) of any one of claims 1 to 11, wherein the additive (106) is applied to the component (100) when the gas turbine engine (10) is not operating.

13. The method (200) of claim 8, further comprising:
determining, via a sensor (180), the predicted deposit (110) formed on the component (100) during operation of the gas turbine engine (10); and
spraying the solution (154) onto the surface of the component (100) via one or more nozzles (176) during operation of the gas turbine engine (10), wherein the one or more nozzles (176) are disposed proximal to the component (100), and wherein the one or more nozzles (176) are fluidically connected to a reservoir (170) storing the solution (154).

14. A component (100) for a gas turbine engine (10), wherein the component (100) comprises the additive (106) that is applied according to the method (200) of any one of claims 1 to 13.

15. A gas turbine engine (10) including the component (100) of claim 14.
